# EUROPEAN PATENT SPECIFICATION

(11) **EP 3 654 212 B1**
(45) Date of publication and mention of the grant of the patent: **09.03.2022**
(21) Application number: 18207108.4
(22) Date of filing: 19.11.2018
(51) Int. Cl.: G06F 21/32

(54) **ELECTRONIC DEVICE AND METHOD OF OPERATION**
ELEKTRONISCHES GERÄT UND BETRIEBSVERFAHREN
APPAREIL ELECTRONIQUE ET METHODE D'OPERATION

(43) Date of publication of application: 20.05.2020
(73) Proprietor: Vestel Elektronik Sanayi ve Ticaret A.S., 45030 Manisa (TR)
(72) Inventor: KIRISKEN,, Barbaros, 45030 Manisa (TR)
(74) Representative: Flint, Adam

(56) References cited:
- US-A1- 2018 068 101
- US-B2- 9 985 787
- US-B2- 10 002 244

## Description

### Technical Field

The present disclosure relates to an electronic device and a method of operating an electronic device.

### Background

Authenticating and authorising a user using an electronic device is important because it is expected to limit certain actions for certain users. Alternatively it may be expected to restrict access to certain documents, applications or actions because such documents, applications or actions are personal or restricted and the user does not want another user to access such content. Accordingly there are certain user authentication mechanisms used in devices, which provide authorisation to perform an action in accordance with the authentication of the user. In general as used herein and unless the context requires otherwise, "authenticating" a user who is using a device means confirming that the user is the person they say they are or purport they are, and "authorising" a user means giving that user the authorisation to carry out some action. It may be noted that in some circumstances, "authenticating" a user and "authorising" a user may be carried out by the same process and/or hardware, for example in one stage. In other circumstances, "authenticating" and "authorising" may be carried out by the same or different process and/or hardware, and may be carried out as separate, discrete processes.

The simplest user authorisation system is password protection, wherein the user must enter the password which he or she has defined to the system in advance. When a user tries to access to a content requiring user authentication, the system recognizes that the content to be accessed requires a specific authorization and asks the user to provide the password. If the user enters the correct password which was defined before, the system authorises the user to access that content. If the user cannot enter the correct password, the system restricts the user's access to that content until the correct password is provided.

There are also other authentication methods for authorising a user, wherein the user is required to enter a PIN number which is also similar to a password but composed of only numbers instead. Alternatively the user is asked to provide a certain pattern on a touch screen which the user defined to the system in advance. The method then authorises the user in accordance with the authentication information.

The authorisation methods which are mentioned above are mere examples. Because a complexity of a certain degree is required in order to decrease the possibility of a restricted user to guess the password and access the content, long passwords, PIN numbers or patterns should be used. However using long passwords, PIN numbers or patterns causes annoyance to the user, because the user should provide the correct combination with each access and it may become tiresome.

In order to limit the possibility of false logins and to increase the complexity without making the user enter long passwords, PINs or patterns, biometrics may also be used to authenticate and authorise users. Biometrics is the technical term for body measurements and calculations. Biometric identifiers include fingerprint, palm, veins, face recognition, DNA and such. One of the most common implementation of biometrics are fingerprints. Fingerprint sensors are used to identify the user without requiring much effort from the user. The user simply holds his/her finger over a fingerprint sensor. The fingerprint sensor reads the fingerprint of the user and the system identifies the user and provides the required authentication for the authorisation.

US9985787B2 discloses a method and apparatus for providing authentication of the user via his or her fingerprint signature as recognized on the touch screen of the mobile device. The device has multiple authentication states and one of the authentication states is the continuous authentication, wherein the exemplary fingerprints for the user are loaded from a data store and are continually compared against data samples captured as the user interacts with the device in general use.

### Summary

According to a first aspect of the present disclosure, there is provided a method of operating an electronic device, the method comprising: reading the fingerprint of a finger of a user touching the electronic device at a first instance of time; detecting a swipe gesture wherein the swipe gesture is a continuation of the finger touching the electronic device at the first instance of time; reading the fingerprint of the finger of the user swiping the electronic device at a second instance of time during the swipe gesture; determining if the fingerprint of the finger of the user touching the electronic device that is read at the first instance of time matches the fingerprint of the finger of the user touching the display that is read at the second instance of time by comparing the fingerprint captured at the first instance of time with the fingerprint captured at the second instance of time; and authorising the user only if the fingerprint read at the first instance of time matches the fingerprint read at the second instance of time.

In an example, the method comprises comparing the fingerprint read at the first instance of time with predetermined fingerprint data, and authenticating the user if the fingerprint read at the first instance of time matches the predetermined fingerprint data.

In an example, reading the fingerprint produces captured fingerprint data which comprises a plurality of sub-blocks of data, wherein each sub-block of data represents a different region of the read fingerprint..

In an example, determining if the fingerprint read at the first instance of time matches the fingerprint read at the second instance of time comprises comparing only at least one selected sub-block of the fingerprint data captured at the first instance of time with the corresponding at least one selected sub-block of the fingerprint data captured at the second instance of time.

In an example, at least one selected sub-block comprises at least one sub-block representing the central region of the captured fingerprint.

In an example, at least one selected sub-block comprises at least one sub-block representing a side region of the captured fingerprint.

In an example, the fingerprint data captured at the first instance of time and the fingerprint data captured at the second instance of time are compared by calculating the cross-correlation between the selected respective sub-blocks of the fingerprint data.

In an example, determining if the fingerprint of the finger of the user touching the electronic device that is read at the first instance of time matches the fingerprint of the finger of the user touching the display that is read at the second instance of time comprises calculating the cross-correlation between fingerprint data captured at the first and second instances of time.

In an example, the fingerprint read at the first instance of time is determined to match the fingerprint read at the second instance of time when the maximum value of the calculated cross-correlation is above a predetermined threshold.

In an example, a fingerprint of the user is read using ultrasonic waves by transmitting ultrasonic waves from an ultrasonic transmitter and receiving reflected ultrasonic waves with an ultrasonic receiver.

In an example, a fingerprint of the user is read at the first instance of time by using a first ultrasonic receiver and a fingerprint of the user is read at the second instance of time by a second ultrasonic receiver.

In an example, the method comprises reading fingerprints at further instances of time between the first instance of time and the second instance of time as long as the presence of the touch of the user is detected.

In an example, the method comprises determining if the fingerprint of the finger of the user touching the electronic device at the first instance of time matches the fingerprint of the finger of the user touching the electronic device at further instances of time and authorising the user only if the fingerprint of the first instance of time matches the fingerprint of the further instances of time.

According to a second aspect of the present disclosure, there is provided an electronic device comprising: a fingerprint sensor arranged to detect the fingerprint of the finger of a user touching the electronic device; the electronic device being constructed and arranged to carry out an authorisation function by: reading the fingerprint of the finger of a user touching the electronic device at a first instance of time; detecting a swipe gesture, wherein the swipe gesture is a continuation of the finger touching the electronic device at the first instance of time; reading the fingerprint of the finger of the user swiping the electronic device at a second instance of time during the swipe gesture; determining if the fingerprint of the finger of the user touching the electronic device that is read at the first instance of time matches the fingerprint of the finger of the user touching the display that is read at the second instance of time by comparing the fingerprint captured at the first instance of time with the fingerprint captured at the second instance of time; and authorising the user only if the fingerprint of the first instance of time matches the fingerprint of the second instance of time.

In an example, the electronic device comprises a touch screen, the fingerprint sensor being arranged to detect the fingerprint of the finger of a user touching the touch screen of the electronic device.

### Brief Description of the Drawings

To assist understanding of the present disclosure and to show how embodiments may be put into effect, reference is made by way of example to the accompanying drawings in which:
Figure la shows schematically an example of a known electronic device, where the user is authenticated for a payment via a fingerprint sensor located separately from the display;
Figure 1b shows schematically another example of a known electronic device, where the user is authenticated for providing access to the user authentication system;
Figure 2a shows schematically an example of a known electronic device, where the fingerprint sensor is located in the touch screen display;
Figure 2b shows schematically an example of a known electronic device, where the finger is read only once from the fingerprint sensor located in the touch screen display;
Figure 3 shows schematically an example of an electronic device disclosed herein;
Figure 4 shows schematically an example of an electronic device disclosed herein;
Figure 5 shows schematically an example of an electronic device disclosed herein for making a payment using the swipe gesture; and
Figure 6 shows schematically an example of a captured fingerprint comprising a plurality of sub-blocks.

### Detailed Description

There are many systems which are integrated with fingerprint sensors to identify the person who is operating on the system. Such systems may be integrated to any devices where the identification and authentication of the user is important in order to restrict access to a physical location, such as safes, doors or gates. The systems can also be integrated in order to restrict access to virtual locations, such as data in a memory and certain features of a computer program in devices like a computer, a mobile phone or a tablet.

There are different fingerprint sensor types for reading the fingerprint of a user. They use different methods and algorithms in order to identify the fingerprint, such as by identifying the fingerprint ridges of a human finger.

Optical scanners provide a method of capturing fingerprints using optical properties. An optical fingerprint scanner captures an image of a fingerprint or a finger. Such systems perform certain image processing algorithms on the captured image mostly by performing calculations on light and dark areas within the image. Using these algorithms, optical fingerprint scanner systems detect certain patterns of a fingerprint.

Another type of fingerprint sensors is a capacitive scanner. Capacitive scanners provide a method of capturing fingerprints using a capacitive surface. When a user places a finger on a capacitive surface, the capacitive surface may detect the ridges of the finger and the valleys between the ridges, because the valleys and ridges will give rise to different local capacitances. In particular, the ridges will often touch the capacitive surface and therefore have a certain capacitance. On the other hand the valleys between the ridges of the fingerprint do not touch the surface and there will typically be an air gap between the surface and the skin in the fingerprint valleys, giving rise to a different capacitance at the locations of the valleys of the fingerprint. By mapping the capacitance values over the capacitive surface where the finger is touching the surface, the capacitive fingerprint scanner system detects certain patterns of the fingerprint.

A relatively recent type of a fingerprint sensor is an ultrasonic scanner. Such scanners use an ultrasonic transmitter to transmit ultrasonic signals to a finger which is placed over the scanner. While some of the ultrasonic signals are deflected away, some of them are received by an ultrasonic receiver. The ultrasonic signals received by the receiver are measured on different points on the ultrasonic receiver and processed in order to map the patterns of the fingerprint.

The ultrasonic fingerprint scanners have also certain advantages over capacitive scanners and optical scanners. They are able to map the fingerprint in 3D which improves the detail of the fingerprint in three dimensions, hence increasing the security. Because the ultrasonic signals can pass through different materials, the system can be provided with more flexible design options, including reading the fingerprint through glass material. The signals may also be arranged to pass through common contaminants of a finger, such as sweat, dirt and oil, which creates relatively more accurate scanning.

One of the methods of such scanners to read the fingerprint requires that the user puts a finger on a sensor, wherein the sensor is able to read the fingerprint as a whole at an instance of time, similar to taking a picture or photograph. These scanners are called "static scanners", because the user does not have to move the finger for the reading of the fingerprint. Another alternative is a "swipe scanner", wherein the user is required to swipe at a steady pace over a one dimensional array of sensors, which are arranged as one line of pixels, so that the swipe scanner can detect a two dimensional image of the fingerprint.

The fingerprint scanners, either a static scanner or a swipe scanner, may be provided with an electronic device in order to increase the security measures for the electronic device as mentioned above. Fingerprint scanners may be located at an external location separately the electronic device so that the fingerprint can be read by a separate scanner and the signals representing the fingerprint are sent to the electronic device. Alternatively the fingerprint sensor is located at an exposed location of the device, where the user may identify the location of the fingerprint sensor and place a finger on the sensor. In another alternative, the fingerprint sensor may be located within the device where the user cannot identify the location of the fingerprint sensor. In an example the fingerprint sensor may be located within or behind the touch screen display of the electronic device, so that each finger interaction with the touch screen display may be detected by the fingerprint sensor, since the user will be touching or swiping the touch screen display.

Touch screen displays are widely used because they allow users to directly communicate with the user interface of an electronic device in a convenient way without any hardware keys and buttons or the like. The absence of hardware keys and buttons also allows a more solid structure for the electronic devices and it also provides the possibility to manufacture smaller and thinner electronic devices. Such touch screen displays are especially used with mobile terminals, smartphones and tablet computers.

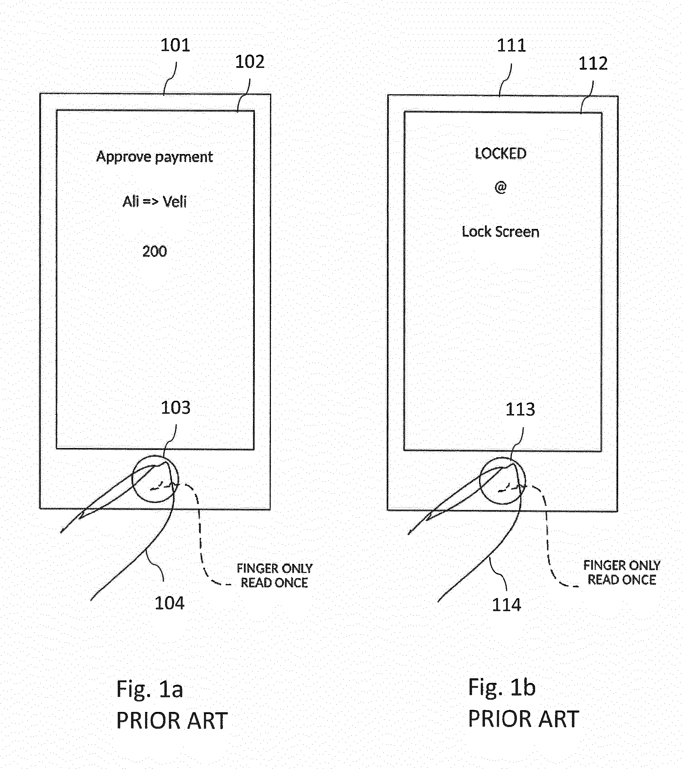

An example of a known electronic device is shown in Figure 1a. The apparatus 101 has a body, a display 102 and an exposed fingerprint sensor 103. When the user places a finger 104 on the fingerprint sensor 103, the fingerprint sensor 103 reads the fingerprint of the user. The fingerprint sensor 103 reads the finger 104 only once. A processor matches the read fingerprint to previously provided fingerprints in its memory and identifies the user from the read fingerprint. Once the user is identified, the processor checks if the user is authorised to perform the action, e.g. approve the payment displayed on the display 102 in this example.

Another example of a known electronic device is shown in Figure 1b. The apparatus 111 has a body, a display 112 and an exposed fingerprint sensor 103. Similar to the example of Figure 1a, when user places a finger 104 on the fingerprint sensor 103, the fingerprint sensor 103 reads the fingerprint of the user. The fingerprint sensor 103 reads the finger 104 only once. A processor matches the read fingerprint to previously provided fingerprints in its memory and identifies the user from the captured finger. Once the user is identified, the processor checks if the user is authorised to perform the action, i.e. unlock the screen in this example.

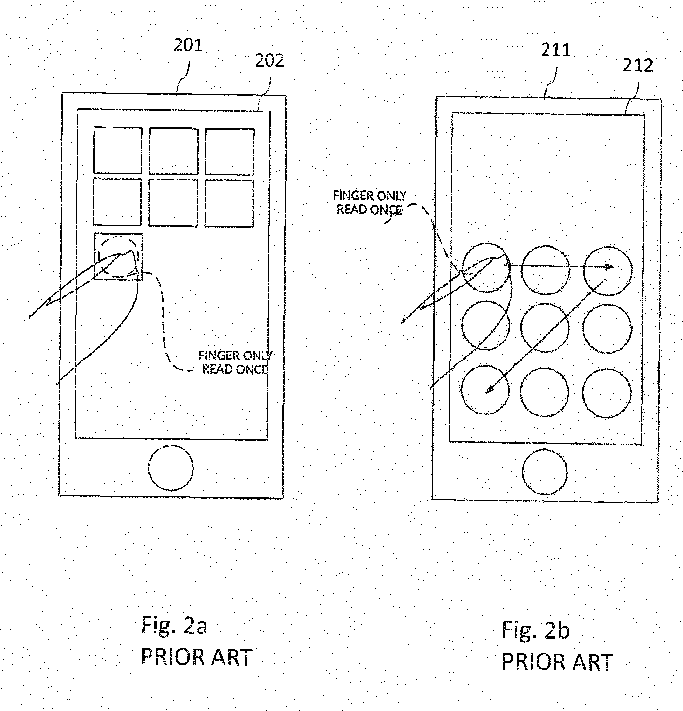

Another example of an electronic device is shown in Figure 2a. The electronic device 201 has a body and a touch screen display 202 through which the user can enter commands by touching the display. The touch screen display 202 can be any touch screen display type. Such touch screen display types can be for example a resistive touch screen display, a capacitive touch screen display, a projected capacitive touch screen display, an infrared touch screen display, an optical touch screen display, or a surface acoustic wave touch screen display. The electronic device 201 is also equipped with a fingerprint sensor which is able to read the user's fingerprint through the touch screen display 202 when the user touches the touch screen display 202.

The electronic device 201 has a user authorisation system, through which it is possible to set certain authorisation requirements in order to run applications. An example might be that an administrator authorizes only certain users to run an application. Another example might be that the administrator monitors which user accesses the application. Accordingly the electronic device 201 reads the fingerprint of the user touching the touch screen display 202 and processes the captured fingerprint with its processor to identify the user. In an example, if the user is authenticated and the authenticated user is authorised, the electronic device 201 runs the application.

Figure 2b shows another example of an electronic device comprising a user authorisation system. The electronic device 211 has a body and a touch screen display 212 through which the user can enter his commands by touching the display. The touch screen display 212 can be any touch screen display type as mentioned above. The electronic device 211 is also equipped with a fingerprint sensor which is able to read the user's fingerprint through the touch screen display 212 when the user touches the touch screen display 212.

In an example the electronic device 211 has a user authorisation system, through which it is possible to set certain authorisation requirements in order to unlock the touch screen display 212. An example might be that the user draws a pattern on the touch screen display 212 by swiping the finger for unlocking the electronic device 211 and obtaining an access to the electronic device 211. The drawn pattern is compared with a previously stored pattern and if the drawn pattern matches the previously stored pattern, the electronic device 211 becomes unlocked. In order to increase the security and prevent access of the unauthorized users who draws the previously stored pattern, the electronic device 211 first reads the fingerprint of the user drawing the pattern and unlocks the electronic device 211 only if the user draws the matching pattern and if the user is authenticated and authorised with the fingerprint.

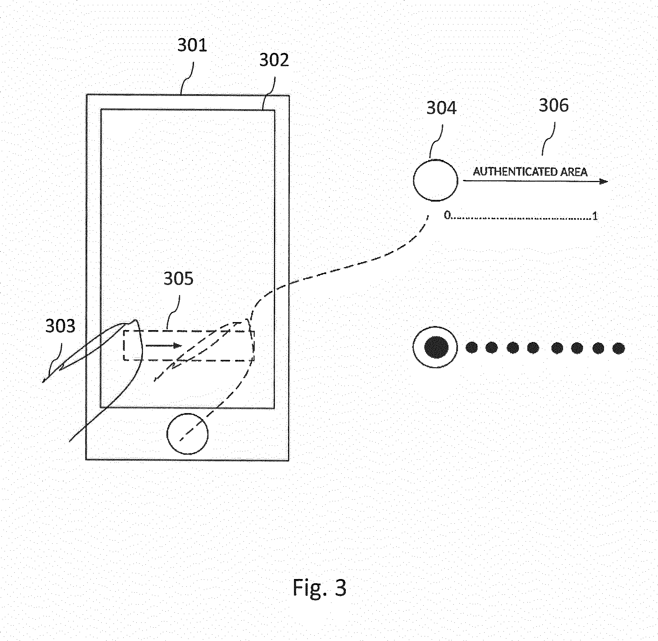

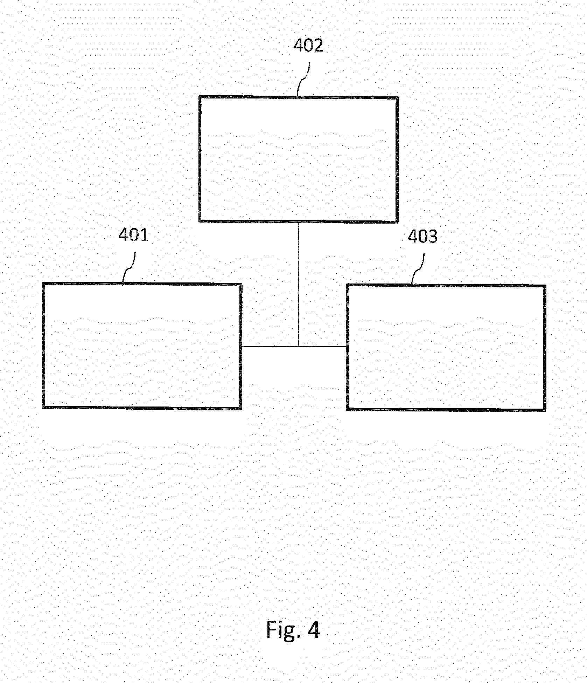

Figure 3 shows schematically an example of an electronic device in accordance with the present disclosure. Additionally, Figure 4 shows schematically an example of some components of such an electronic device.

The electronic device 301 has a body, a touch screen display 302, a fingerprint sensor 401, a processor 402, a memory 403. When the user places a finger 303 on the touch screen display 302, the touch screen display 302 detects the presence of a first touch at the first position 304 on the touch screen display 302 of the electronic device 301 at the first instance of time and sends the electrical signals representing the touch to the processor 402. With the detection of the presence of the first touch, the fingerprint sensor 401 reads the fingerprint of the finger 303 and the electronic device 301 stores the fingerprint data in the memory 403. Reading of the fingerprint of the finger 303 of the user touching the electronic device 301 may be performed by for example capturing the fingerprint data by the fingerprint sensor 401 and storing the captured fingerprint data in the memory 403.

The fingerprint sensor 401 reads the fingerprint of the finger 303 touching the electronic device 301. The fingerprint sensor 401 in this example is located within the electronic device 301 in a fashion where the user cannot see or identify the fingerprint sensor 401 as such. In an example the fingerprint sensor 401 may be a part of the touch screen display 302, so that it reads the fingerprint of the finger 303 touching the electronic device 301 through the touch screen display 302 when the user interacts with the touch screen display 302. In another example, the fingerprint sensor 302 may be located in an exposed fashion with a separately provided surface so that the fingerprint sensor can read the fingerprint touching the electronic device 301 by its separated surface. In another alternative the fingerprint sensor may be located at an external location and connected to the electronic device by a suitable connection arrangement, which may be a wired or wireless connection, etc.

In an example, reading the fingerprint of the finger 303 of the user touching the electronic device 301 may comprise the processor 402 determining if the fingerprint of the finger 303 of the user touching the touch screen display 302 at the first instance of time matches one of the previously stored fingerprints in the memory 403. In an example the captured fingerprint is compared with one or more previously stored fingerprints in the memory 403. In one example, comparing the captured fingerprint comprises capturing the fingerprint data by reading the finger 303 on the fingerprint sensor 401, and comparing the fingerprint read at the first instance of time with predetermined fingerprint data in the memory 403. The predetermined fingerprint data in the memory includes previously stored fingerprints. Such determination would allow the electronic device 301 to identify the user who places the finger 303 on the touch screen display 302. Either way, the user is then authenticated if the fingerprint read at the first instance of time matches the predetermined fingerprint data.

The input method to the electronic device 301 which may be used by the user to interact with the electronic device 301 is not limited to a single touch to the touch screen display 302. The electronic device 301 is also able to detect a swipe gesture when user interacts with the touch screen display 302. The swipe gesture is a gesture in which the user touches the touch screen display 302 at a first location at a first instance of time and slides the finger to a second location at a second instance of time without breaking the contact with the touch screen display 302 as a continuation of the finger touching the touch screen display 302 at the first instance of time. When the user slides the finger 303 on the touch screen display 302 in a direction without breaking the contact, the processor 402 detects the action as a swipe gesture by processing the signals received from the touch screen display 302.

In another example, the electronic device may be provided with a fingerprint sensor which is able to detect a touch and a swipe gesture, wherein the swipe gesture is a continuation of the finger touching the fingerprint sensor at the first instance of time, and not via any touch screen or the like. This may be suitable for examples where the user interacts with the electronic device other than via a touch screen, and indeed the electronic device may not have a touch screen or any screen at all. The electronic device may be or have some separate touch pad. The fingerprint sensor may be used to interact with the electronic device. In an example the detection of the swipe gesture is made by the electronic device with the fingerprint sensor.

As an example, the swipe gesture may be used for drawing a pattern as already shown in Figure 2b. As another example the swipe gesture may be used for certain actions on the user interface on the touch screen display 302, such as moving an element of the user interface from a first location on the user interface to a second location on the user interface in a continuous manner as shown in 305. In an example the element may be an image representing a button, such as a lock image, which represents that the electronic device 301 is locked and the user cannot interact with the electronic device 301 in a usual fashion. The lock image also acts as a button which the user can use with a swipe action in order to move the lock icon from a first location to a second location. When the lock icon is moved from the first location to the second location by the swipe gesture, the electronic device 301 may become unlocked and the user may interact with the electronic device 301. In another example the swipe gesture may be required to be performed on the fingerprint sensor.

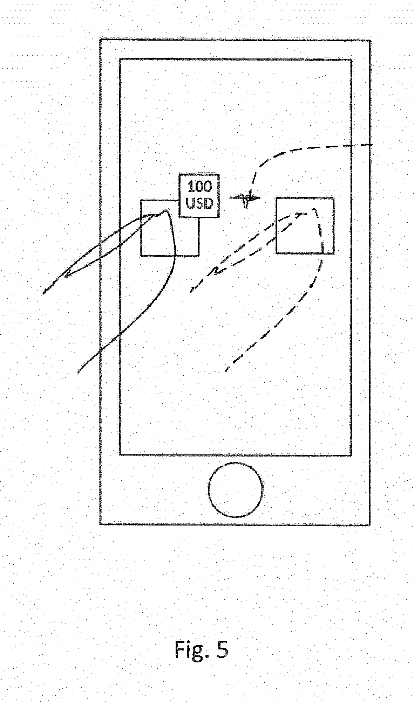

In an example, a swipe gesture is required in order to provide interaction with the electronic device 301 for performing a user authorised action. Such user authorised action may be for example running an application, or making an authenticated payment or accessing some remote or online account or the like. An example is shown in Figure 5, wherein the user is required to slide the payment icon to a first position on the touch screen display 302 in order to make a payment. Alternatively such action may be locking or unlocking the electronic device 301. In another alternative the swipe action is required for authorising the user, so that when the user is authenticated, information of authentication or alternatively information of authorisation is provided to another device or arrangement to provide physical access such as a door or a safe-door.

In case of the requirement of the user authenticated swipe gesture 305, the electronic device 301 reads the fingerprint of the finger 303 of the user swiping the touch screen display 302 at least at a second instance of time wherein the second instance of time is a certain time later than the first instance of time. Such reading is made after the reading of the fingerprint at the first instance of time in response to the detection of a swipe gesture. In an example the fingerprint sensor 401 reads the fingerprint of the finger 303 at the second instance of time while the swipe gesture continues and the electronic device 301 stores the fingerprint data in the memory 403. In another example, the fingerprint sensor 401 reads the fingerprint and stores the captured fingerprint data in the memory 403 a plurality of times, for example at certain time intervals, during the swipe gesture through the authenticated area 306. In an example, only the latest of the captured fingerprint data through the authenticated area 306 at certain time intervals is considered as the captured fingerprint at the second instance of time. The electronic device 301 can determine that the fingerprint of the finger which started the swipe gesture by touching to the touch screen display 302 at the first instance of time matches the fingerprint of the finger finalizing the swipe gesture at the second instance of time, namely the latest of the captured fingerprint data during the swipe gesture.

In an example the captured fingerprint data is a two dimensional data which may represent a two dimensional image of the fingerprint. Alternatively the captured fingerprint data may be an array defining the impression of the fingerprint as a one dimensional data. In another example the captured fingerprint data may be a three dimensional data representing the impression of the fingerprint in three dimensions. The three dimensional fingerprint data provides more secure authentication compared to one dimensional and two dimensional data, because it allows the patterns of the fingerprint to be defined in another dimension which increases the complexity of the data to be compared with the previously provided fingerprint in the memory.

In an example when the captured fingerprint data is produced by reading the fingerprint, the captured fingerprint data comprises a plurality of sub-blocks of data, wherein each sub-block of data represents different regions of the read fingerprint. The sub-blocks of data can be arranged to be blocks of equal rectangular sized elements, such as 3x3, 16x9, 100x100 elements for each block, where for example an element is a pixel or a block of pixels. Alternatively the sub-block of data can be arranged to include certain patterns or certain physical features.

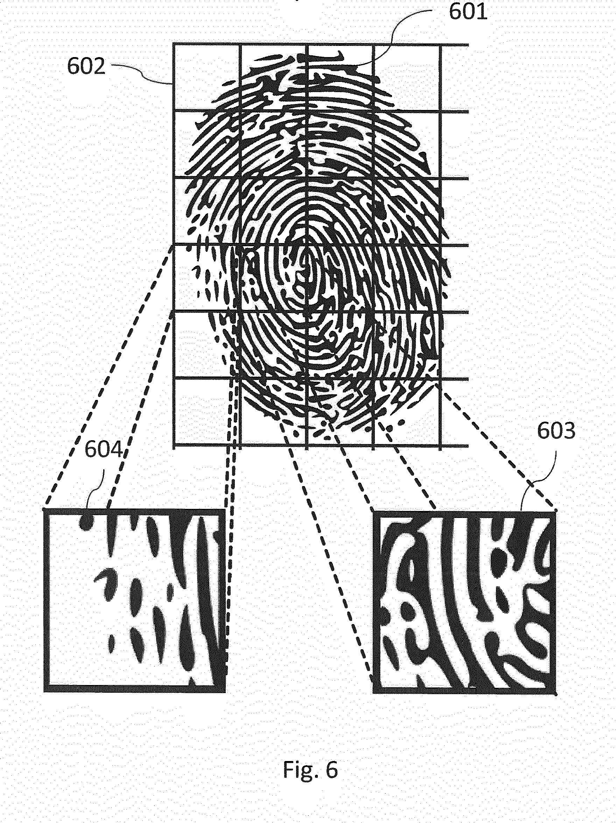

Figure 6 shows schematically a captured fingerprint 601 and a plurality of sub-blocks representing different regions of the captured fingerprint 602. In one alternative the region representing the central region of the finger can be detected by detecting the pressure of the finger touching the touch screen or other touch pad or through other ways such as using image processing methods on the captured fingerprint data. The central region is assigned as a central sub-block 603. Another region representing a side region of the finger which is around or adjacent the central region of the finger can be assigned as a side sub-block 604. There may be plural side regions and plural corresponding side sub-blocks 604, which correspond to different sides or parts of the finger around or adjacent the central region. These sub-blocks may be used for the purpose of reducing the processing requirements when reading the captured fingerprint by comparing the captured fingerprint data to at least one predetermined fingerprint data.

The predetermined fingerprint data, against which the fingerprint captured at the first instance of time is compared, may be fingerprint data previously stored in the memory 403. The fingerprint data captured at the second instance of time may be also be compared to the prestored predetermined fingerprint data. In another example the predetermined fingerprint data for comparing the fingerprint data captured at the second instance of time may be the fingerprint data that was captured at the first instance of time.

The processor 402 then performs a determination by checking if the captured fingerprint at the first instance of time matches the captured fingerprint at the second instance of time. If the captured fingerprint at the first instance of time matches the captured fingerprint at the second instance of time, in one of the examples this indicates that the finger touching the touch screen display 302 at the first instance of time has the same fingerprint as the finger touching the touch screen display 302 at the second instance of time. Such determination provides improved security mechanism for many reasons including that it provides more complex authorisation due to the requirement of being authenticated during a swipe gesture at the authenticated area 306 and it is less susceptible to fingerprint spoofing techniques including either spoofing using physical means (such as creation of a replicated fingerprint) or using virtual means (using fingerprint data or authorisation of another application). Because the fingerprint is authenticated at at least two instances during the swipe gesture, it is more securely understood that the user who touches the touch screen display 302 is also the user completing the swipe gesture.

In an example the touch screen display 302 reads the fingerprint of the user by using ultrasonic waves, that is, sound with a frequency greater than around 20 kHz. Accordingly the electronic device 301 comprises an ultrasonic transmitter to transmit ultrasonic signals towards the touch screen display and an ultrasonic receiver to receive ultrasonic signals reflected from the finger touching the touch screen display 302. In an example the electronic device 301 may comprise an ultrasonic receiver which is able to receive reflected ultrasonic waves over substantially all regions of the touch screen display 302. In another example the apparatus may comprise a plurality of ultrasonic receivers, wherein the ultrasonic receivers are arranged in a fashion to detect ultrasonic reflected signals at different regions of the touch screen display 302. In an example, the plurality of ultrasonic receivers is set up as a two-dimensional array or a matrix, which may be located behind the glass of the touch screen display.

In an example the captured fingerprint at the first instance of time and the captured fingerprint at the second instance of time are read using an ultrasonic receiver. In another example the captured fingerprint at the first instance of time is detected by using a first ultrasonic receiver and the captured fingerprint at the second instance of time is detected by a second ultrasonic receiver.

In order to perform such determination, the determination of whether the fingerprint at the first instance of time matches the fingerprint at the second instance of time is performed by comparing the captured fingerprint at the first instance of time and the captured fingerprint at the second instance of time. The comparison can be made by comparing identified patterns of captured fingerprint data. Such patterns may be for example the three basic patterns of fingerprints, that is arches, loops and whorls. Such patterns may be for example more specific, including for example the eight basic patterns of plain arch, tented arch, radial loop, ulnar loop, double loop, plain whorl, central pocket loop whorl and accidental whorl. In an example, as a first stage, the patterns are identified in the captured fingerprint at the first instance of time and as a second stage the captured fingerprint at the second instance of time is processed to identify the same or substantially same patterns of the captured fingerprint at the first instance of time. When enough patterns of the captured fingerprint at the first instance of time are matched to the patterns of the captured fingerprint at the second instance of time, the determination that the fingerprint at the first instance of time matches the fingerprint at the second instance of time is made.

In an example, the comparison is not performed using the whole captured fingerprint data for each instance. The comparison is performed by comparing only selected sub-blocks of each instance. Accordingly at least one selected sub-block of the captured fingerprint at the first instance of time is compared with at least one selected corresponding sub-block of the captured fingerprint at the second instance of time. In an example, the at least one selected sub-block represents the central region of the captured fingerprints. In another example, the at least one selected sub-block represents the or a side region of the captured finger. In another example, the at least one sub-block representing the central region of the captured fingerprint at the first instance of time is compared to at least one sub-block representing the central region of the captured finger at the second instance of time. In another example the processor 402 compares at least one sub-block representing the central region of the captured fingerprint at the first instance of time to at least one sub-block representing the central region of the captured fingerprint at the second instance of time, and the processor 402 also compares the sub-block representing the side region of the captured fingerprint at the first instance of time with the sub-block representing the side region of the captured fingerprint at the second instance of time.

In an example, the processor 402 make the comparison between the captured fingerprint at the first instance of time and the second instance of time by identifying and comparing the patterns as mentioned before. In another example the comparison is performed by image processing algorithms to identify how similar is the captured fingerprint at the first instance of time to the captured fingerprint at the second instance of time. In an example such comparison of similarity is performed by calculating the cross-correlation between the captured fingerprint at the first instance of time and the captured fingerprint at the second instance of time. In another example the calculation of cross-correlation is performed on the selected sub-blocks between the captured fingerprint at the first instance of time and the second instance of time.

In an example, the fingerprint data captured at the first instance of time and the fingerprint data captured at the second instance of time are compared by calculating the cross-correlation between the selected respective sub-blocks of the fingerprint data. In an example, the processor 402 calculates the cross-correlation between at least one selected sub-block representing the central region of the captured fingerprint at the first instance of time and at least one selected sub-block representing the central region of the captured fingerprint at the second instance of time. The calculation of correlation is performed as a cross-correlation between at least one selected sub-block of the first instance of time and at least one selected sub-block of the second instance of time. The maximum value of the cross-correlation is calculated by the processor 402 and if the maximum value is above a predetermined threshold, the fingerprint at the first instance of time is considered to be matching the fingerprint at the second instance of time.

In another example, the processor 402 calculates the cross-correlation between the selected sub-blocks representing the central region and the side region of the captured fingerprint of the first instance of time and the selected sub-blocks representing the central region and the side region of the captured fingerprint of the second instance of time. The calculation of cross-correlation is performed as a cross-correlation between the selected sub-blocks of the first instance of time and the selected sub-blocks of the second instance of time. The maximum value of the cross-correlation is calculated by the processor 402 and if the maximum value is above a predetermined threshold, the fingerprint at the first instance of time is considered to be matching the fingerprint at the second instance of time.

In an example the fingerprints at further instances after the first instance of time except the second instance of time are also read to increase the security of the swipe gesture in order to assist in preventing fingerprint spoofing. The captured fingerprint at each instance is compared at least previously captured fingerprint during the swipe gesture in order to determine if it is the same person continuously swiping the touch screen display 302. Any processes and calculations mentioned above may also be used with further instances as well.

After determining that the fingerprint of the finger 303 touching the touch screen display 302 at the first instance of time matches the fingerprint of the finger 303 touching the touch screen display 302 at the second instance of time, in an example the user is authorised. In an example when the captured fingerprint at the first instance of time matches the captured fingerprint at the second instance of time, one of the captured fingerprints, either the captured fingerprint at the first instance of time or alternatively the captured fingerprint at the second instance of time, is matched by the processor 402 to a previously stored fingerprint in the memory 403. As the user is authorised, the processor 402 performs the authorised action.

It will be understood that the processor referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory. This may be provided by a semiconductor memory, or single chip or integrated circuit or plural chips or integrated circuits, optionally provided as a chipset, or single device or by plural devices. Suitable devices include for example a RAM, DRAM, SRAM, a hard disk and non-volatile semiconductor memory (e.g. a solid-state drive or SSD).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer implemented method of operating an electronic device, the method comprising:
reading the fingerprint of a finger (303) of a user touching the electronic device at a first instance of time;
detecting a swipe gesture wherein the swipe gesture is a continuation of the finger (303) touching the electronic device at the first instance of time;
reading the fingerprint of the finger (303) of the user swiping the electronic device at a second instance of time during the swipe gesture;
**characterized in that** the method comprises:
determining if the fingerprint of the finger (303) of the user touching the electronic device (301) that is read at the first instance of time matches the fingerprint of the finger (303) of the user touching the display that is read at the second instance of time by comparing the fingerprint captured at the first instance of time with the fingerprint captured at the second instance of time; and
authorising the user only if the fingerprint read at the first instance of time matches the fingerprint read at the second instance of time.

2. The method of claim 1, comprising comparing the fingerprint read at the first instance of time with predetermined fingerprint data, and authenticating the user if the fingerprint read at the first instance of time matches the predetermined fingerprint data.

3. The method of claim 1 or claim 2, wherein reading the fingerprint produces captured fingerprint data which comprises a plurality of sub-blocks of data (602, 603, 604), wherein each sub-block of data (602, 603, 604) represents a different region of the read fingerprint.

4. The method of claim 3, wherein determining if the fingerprint read at the first instance of time matches the fingerprint read at the second instance of time comprises comparing only at least one selected sub-block (602, 603, 604) of the fingerprint data captured at the first instance of time with the corresponding at least one selected sub-block (602, 603, 604) of the fingerprint data captured at the second instance of time.

5. The method of claim 4, wherein the at least one selected sub-block (602, 603, 604) comprises at least one sub-block (602, 603, 604) representing the central region of the captured fingerprint (601).

6. The method of claim 4 or claim 5, wherein the at least one selected sub-block (602, 603, 604) comprises at least one sub-block (602, 603, 604) representing a side region of the captured fingerprint (601).

7. The method of any of claims 4 to 6, wherein the fingerprint data captured at the first instance of time and the fingerprint data captured at the second instance of time are compared by calculating the cross-correlation between the selected respective sub-blocks (602, 603, 604) of the fingerprint data.

8. The method of any of claims 1 to 6, wherein determining if the fingerprint of the finger (303) of the user touching the electronic device (301) that is read at the first instance of time matches the fingerprint of the finger (303) of the user touching the display that is read at the second instance of time comprises calculating the cross-correlation between fingerprint data captured at the first and second instances of time.

9. The method of claim 8, wherein the fingerprint read at the first instance of time is determined to match the fingerprint read at the second instance of time when the maximum value of the calculated cross-correlation is above a predetermined threshold.

10. The method of any of claims 1 to 9, wherein a fingerprint of the user is read using ultrasonic waves by transmitting ultrasonic waves from an ultrasonic transmitter and receiving reflected ultrasonic waves with an ultrasonic receiver.

11. The method of claim 10, wherein a fingerprint of the user is read at the first instance of time by using a first ultrasonic receiver and a fingerprint of the user is read at the second instance of time by a second ultrasonic receiver.

12. The method of any of claims 1 to 11, wherein the method comprises reading fingerprints at further instances of time between the first instance of time and the second instance of time as long as the presence of the touch of the user is detected.

13. The method of claim 12, wherein the method comprises determining if the fingerprint of the finger (303) of the user touching the electronic device (301) at the first instance of time matches the fingerprint of the finger (303) of the user touching the electronic device (301) at further instances of time and authorising the user only if the fingerprint of the first instance of time matches the fingerprint of the further instances of time.

14. An electronic device (301) comprising:
a fingerprint sensor (401) arranged to detect the fingerprint of the finger (303) of a user touching the electronic device (301);
the electronic device (301) being constructed and arranged to carry out an authorisation function by:
reading the fingerprint of the finger (303) of a user touching the electronic device (301) at a first instance of time;
detecting a swipe gesture, wherein the swipe gesture is a continuation of the finger touching the electronic device (301) at the first instance of time;
reading the fingerprint of the finger (303) of the user swiping the electronic device (301) at a second instance of time during the swipe gesture;
**characterized in that** the authorisation function comprises;
determining if the fingerprint of the finger (303) of the user touching the electronic device (301) that is read at the first instance of time matches the fingerprint of the finger (303) of the user touching the display that is read at the second instance of time by comparing the fingerprint captured at the first instance of time with the fingerprint captured at the second instance of time; and
authorising the user only if the fingerprint of the first instance of time matches the fingerprint of the second instance of time.

15. An electronic device (301) according to claim 14, the electronic device (301) comprising a touch screen (302), the fingerprint sensor (401) being arranged to detect the fingerprint of the finger (303) of a user touching the touch screen of the electronic device (301).

## Patentansprüche

1. Computerimplementiertes Verfahren zum Betreiben eines elektronischen Geräts, wobei das Verfahren aufweist:
Lesen des Fingerabdrucks eines Fingers (303) eines Benutzers, der das elektronische Gerät zu einem ersten Zeitpunkt berührt;
Erfassen einer Wischgeste, wobei die Wischgeste eine Fortsetzung des das elektronische Gerät zum ersten Zeitpunkt berührenden Fingers (303) ist;
Lesen des Fingerabdrucks des Fingers (303) des Benutzers, der das elektronische Gerät zu einem zweiten Zeitpunkt während der Wischgeste wischt;
**dadurch gekennzeichnet, dass** das Verfahren aufweist:
Bestimmen, ob der Fingerabdruck des Fingers (303) des Benutzers, der das elektronische Gerät (301) berührt, der zum ersten Zeitpunkt gelesen wird, mit dem Fingerabdruck des Fingers (303) des Benutzers, der die Anzeige berührt, der zum zweiten Zeitpunkt gelesen wird, übereinstimmt, durch Vergleichen des zum ersten Zeitpunkt erfassten Fingerabdrucks mit dem zum zweiten Zeitpunkt erfassten Fingerabdruck; und
Autorisieren des Benutzers nur dann, wenn der zum ersten Zeitpunkt gelesene Fingerabdruck mit dem zum zweiten Zeitpunkt gelesenen Fingerabdruck übereinstimmt.

2. Verfahren nach Anspruch 1, aufweisend ein Vergleichen des zum ersten Zeitpunkt gelesenen Fingerabdrucks mit vorbestimmten Fingerabdruckdaten und ein Authentifizieren des Benutzers, wenn der zum ersten Zeitpunkt gelesene Fingerabdruck mit den vorbestimmten Fingerabdruckdaten übereinstimmt.

3. Verfahren nach Anspruch 1 oder Anspruch 2, bei welchem das Lesen des Fingerabdrucks erfasste Fingerabdruckdaten erzeugt, die mehrere Datenteilblöcke (602, 603, 604) aufweist, wobei jeder Datenteilblock (602, 603, 604) einen anderen Bereich des gelesenen Fingerabdrucks darstellt.

4. Verfahren nach Anspruch 3, bei welchem das Bestimmen, ob der zum ersten Zeitpunkt gelesene Fingerabdruck mit dem zum zweiten Zeitpunkt gelesenen Fingerabdruck übereinstimmt, ein Vergleichen von nur wenigstens einem ausgewählten Teilblock (602, 603, 604) der zum ersten Zeitpunkt erfassten Fingerabdruckdaten mit dem entsprechenden wenigstens einen ausgewählten Teilblock (602, 603, 604) der zum zweiten Zeitpunkt erfassten Fingerabdruckdaten aufweist.

5. Verfahren nach Anspruch 4, bei welchem der wenigstens eine ausgewählte Teilblock (602, 603, 604) wenigstens einen Teilblock (602, 603, 604) aufweist, der den zentralen Bereich des erfassten Fingerabdrucks (601) darstellt.

6. Verfahren nach Anspruch 4 oder Anspruch 5, bei welchem der wenigstens eine ausgewählte Teilblock (602, 603, 604) wenigstens einen Teilblock (602, 603, 604) aufweist, der einen Seitenbereich des erfassten Fingerabdrucks (601) darstellt.

7. Verfahren nach einem der Ansprüche 4 bis 6, bei welchem die zum ersten Zeitpunkt erfassten Fingerabdruckdaten und die zum zweiten Zeitpunkt erfassten Fingerabdruckdaten durch Berechnen der Kreuzkorrelation zwischen den ausgewählten jeweiligen Teilblöcken (602, 603, 604) der Fingerabdruckdaten verglichen werden.

8. Verfahren nach einem der Ansprüche 1 bis 6, bei welchem das Bestimmen, ob der Fingerabdruck des das elektronische Gerät (301) berührenden Fingers (303) des Benutzers, der zum ersten Zeitpunkt gelesen wird, mit dem Fingerabdruck des die Anzeige berührenden Fingers (303) des Benutzers, der zum zweiten Zeitpunkt gelesen wird, übereinstimmt, ein Berechnen der Kreuzkorrelation zwischen Fingerabdruckdaten, die zu den ersten und zweiten Zeitpunkten erfasst wurden, aufweist.

9. Verfahren nach Anspruch 8, bei welchem der zum ersten Zeitpunkt gelesene Fingerabdruck bestimmt wird, dass er mit dem zum zweiten Zeitpunkt gelesenen Fingerabdruck übereinstimmt, wenn der Maximalwert der berechneten Kreuzkorrelation über einem vorbestimmten Schwellenwert liegt.

10. Verfahren nach einem der Ansprüche 1 bis 9, bei welchem ein Fingerabdruck des Benutzers unter Verwendung von Ultraschallwellen durch Senden von Ultraschallwellen von einem Ultraschallsender Empfangen von reflektierten Ultraschallwellen mit einem Ultraschallempfänger gelesen wird.

11. Verfahren nach Anspruch 10, bei welchem ein Fingerabdruck des Benutzers zum ersten Zeitpunkt unter Verwendung eines ersten Ultraschallempfängers gelesen wird und ein Fingerabdruck des Benutzers zum zweiten Zeitpunkt durch einen zweiten Ultraschallempfänger gelesen wird.

12. Verfahren nach einem der Ansprüche 1 bis 11, wobei das Verfahren ein Lesen von Fingerabdrücken zu weiteren Zeitpunkten zwischen dem ersten Zeitpunkt und dem zweiten Zeitpunkt, solange das Vorhandensein der Berührung des Benutzers erfasst wird, aufweist.

13. Verfahren nach Anspruch 12, wobei das Verfahren aufweist: Bestimmen, ob der Fingerabdruck des das elektronische Gerät (301) zum ersten Zeitpunkt berührenden Fingers (303) des Benutzers mit dem Fingerabdruck des das elektronische Gerät (301) zu weiteren Zeitpunkten berührenden Fingers (303) des Benutzers übereinstimmt, und Autorisieren des Benutzers nur dann, wenn der Fingerabdruck des ersten Zeitpunkts mit dem Fingerabdruck der weiteren Zeitpunkte übereinstimmt.

14. Elektronisches Gerät (301), aufweisend:
einen Fingerabdrucksensor (401), der eingerichtet ist, um den Fingerabdruck des Fingers (303) eines Benutzers, der das elektronische Gerät (301) berührt, zu erfassen;
wobei das elektronische Gerät (301) konstruiert und angeordnet ist, um eine Autorisierungsfunktion auszuführen durch:
Lesen des Fingerabdrucks des Fingers (303) eines Benutzers, der das elektronische Gerät (301) zu einem ersten Zeitpunkt berührt;
Erfassen einer Wischgeste, wobei die Wischgeste eine Fortsetzung des Fingerberührens des elektronischen Geräts (301) zum ersten Zeitpunkt ist;
Lesen des Fingerabdrucks des Fingers (303) des Benutzers, der das elektronische Gerät (301) zu einem zweiten Zeitpunkt während der Wischgeste wischt;
**dadurch gekennzeichnet, dass** die Autorisierungsfunktion aufweist:
Bestimmen, ob der Fingerabdruck des das elektronische Gerät (301) berührenden Fingers (303) des Benutzers, der zum ersten Zeitpunkt gelesen wird, mit dem Fingerabdruck des die Anzeige berührenden Fingers (303) des Benutzers, der zum zweiten Zeitpunkt gelesen wird, übereinstimmt, durch Vergleichen des zum ersten Zeitpunkt erfassten Fingerabdrucks mit dem zum zweiten Zeitpunkt erfassten Fingerabdruck; und
Autorisieren des Benutzers nur dann, wenn der Fingerabdruck des ersten Zeitpunkts mit dem Fingerabdruck des zweiten Zeitpunkts übereinstimmt.

15. Elektronisches Gerät (301) nach Anspruch 14, wobei das elektronische Gerät (301) einen Berührungsbildschirm (302) aufweist, wobei der Fingerabdrucksensor (401) eingerichtet ist, um den Fingerabdruck des den Berührungsbildschirm des elektronischen Geräts (301) berührenden Fingers (303) eines Benutzers zu erfassen.

## Revendications

1. Procédé mis en oeuvre par ordinateur de fonctionnement d'un dispositif électronique, le procédé consistant à :
lire l'empreinte digitale d'un doigt (303) d'un utilisateur touchant le dispositif électronique à un premier instant ;
détecter un geste de balayage dans lequel le geste de balayage est une continuation du doigt (303) touchant le dispositif électronique au premier instant ;
lire l'empreinte digitale du doigt (303) de l'utilisateur balayant le dispositif électronique à un deuxième instant pendant le geste de balayage ;
**caractérisé en ce que** le procédé consiste à :
déterminer si l'empreinte digitale du doigt (303) de l'utilisateur touchant le dispositif électronique (301) qui est lue au premier instant correspond à l'empreinte digitale du doigt (303) de l'utilisateur touchant l'affichage qui est lue au deuxième instant, en comparant l'empreinte digitale capturée au premier instant à l'empreinte digitale capturée au deuxième instant ; et
autoriser l'utilisateur uniquement si l'empreinte digitale lue au premier instant correspond à l'empreinte digitale lue au deuxième instant.

2. Procédé selon la revendication 1, consistant à comparer l'empreinte digitale lue au premier instant à des données d'empreinte digitale prédéterminées, et à authentifier l'utilisateur si l'empreinte digitale lue au premier instant correspond aux données d'empreinte digitale prédéterminées.

3. Procédé selon la revendication 1 ou 2, dans lequel la lecture de l'empreinte digitale produit des données d'empreinte digitale capturées qui comprennent une pluralité de sous-blocs de données (602, 603, 604), dans lequel chaque sous-bloc de données (602, 603, 604) représente une région différente de l'empreinte digitale lue.

4. Procédé selon la revendication 3, dans lequel la détermination de si l'empreinte digitale lue au premier instant correspond à l'empreinte digitale lue au deuxième instant consiste à comparer uniquement au moins un sous-bloc sélectionné (602, 603, 604) des données d'empreinte digitale capturées au premier instant audit au moins un sous-bloc sélectionné correspondant (602, 603, 604) des données d'empreinte digitale capturées au deuxième instant.

5. Procédé selon la revendication 4, dans lequel ledit au moins un sous-bloc sélectionné (602, 603, 604) comprend au moins un sous-bloc (602, 603, 604) représentant la région centrale de l'empreinte digitale capturée (601).

6. Procédé selon la revendication 4 ou 5, dans lequel ledit au moins un sous-bloc sélectionné (602, 603, 604) comprend au moins un sous-bloc (602, 603, 604) représentant une région latérale de l'empreinte digitale capturée (601).

7. Procédé selon l'une quelconque des revendications 4 à 6, dans lequel les données d'empreinte digitale capturées au premier instant et les données d'empreinte digitale capturées au deuxième instant sont comparées en calculant la corrélation croisée entre les sous-blocs sélectionnés respectifs (602, 603, 604) des données d'empreinte digitale.

8. Procédé selon l'une quelconque des revendications 1 à 6, dans lequel la détermination de si l'empreinte digitale du doigt (303) de l'utilisateur touchant le dispositif électronique (301) qui est lue au premier instant correspond à l'empreinte digitale du doigt (303) de l'utilisateur touchant l'affichage qui est lue au deuxième instant consiste à calculer la corrélation croisée entre des données d'empreinte digitale capturées aux premier et deuxième instants.

9. Procédé selon la revendication 8, dans lequel l'empreinte digitale lue au premier instant est déterminée pour correspondre à l'empreinte digitale lue au deuxième instant lorsque la valeur maximale de la corrélation croisée calculée est supérieure à un seuil prédéterminé.

10. Procédé selon l'une quelconque des revendications 1 à 9, dans lequel une empreinte digitale de l'utilisateur est lue à l'aide d'ondes ultrasonores, en transmettant des ondes ultrasonores à partir d'un émetteur à ultrasons et en recevant des ondes ultrasonores réfléchies avec un récepteur à ultrasons.

11. Procédé selon la revendication 10, dans lequel une empreinte digitale de l'utilisateur est lue au premier instant en utilisant un premier récepteur à ultrasons, et dans lequel une empreinte digitale de l'utilisateur est lue au deuxième instant par un deuxième récepteur à ultrasons.

12. Procédé selon l'une quelconque des revendications 1 à 11, dans lequel le procédé consiste à lire des empreintes digitales à d'autres instants entre le premier instant et le deuxième instant tant que la présence du toucher de l'utilisateur est détectée.

13. Procédé selon la revendication 12, dans lequel le procédé consiste à déterminer si l'empreinte digitale du doigt (303) de l'utilisateur touchant le dispositif électronique (301) au premier instant correspond à l'empreinte digitale du doigt (303) de l'utilisateur touchant le dispositif électronique (301) à d'autres instants, et à autoriser l'utilisateur uniquement si l'empreinte digitale du premier instant correspond à l'empreinte digitale des autres instants.

14. Dispositif électronique (301) comprenant :
un capteur d'empreinte digitale (401) agencé pour détecter l'empreinte digitale du doigt (303) d'un utilisateur touchant le dispositif électronique (301) ;
le dispositif électronique (301) étant construit et agencé pour effectuer une fonction d'autorisation en :
lisant l'empreinte digitale du doigt (303) d'un utilisateur touchant le dispositif électronique (301) au premier instant ;
détectant un geste de balayage, dans lequel le geste de balayage est une continuation du doigt touchant le dispositif électronique (301) au premier instant ;
lisant l'empreinte digitale du doigt (303) de l'utilisateur balayant le dispositif électronique (301) au deuxième instant pendant le geste de balayage,
**caractérisé en ce que** la fonction d'autorisation consiste à :
déterminer si l'empreinte digitale du doigt (303) de l'utilisateur touchant le dispositif électronique (301) qui est lue au premier instant correspond à l'empreinte digitale du doigt (303) de l'utilisateur touchant l'affichage qui est lue au deuxième instant, en comparant l'empreinte digitale capturée au premier instant à l'empreinte digitale capturée au deuxième instant ; et
autoriser l'utilisateur uniquement si l'empreinte digitale du premier instant correspond à l'empreinte digitale du deuxième instant.

15. Dispositif électronique (301) selon la revendication 14, le dispositif électronique (301) comprenant un écran tactile (302), le capteur d'empreinte digitale (401) étant agencé pour détecter l'empreinte digitale du doigt (303) d'un utilisateur touchant l'écran tactile du dispositif électronique (301).
